# EUROPÄISCHE PATENTSCHRIFT

(11) **EP 2 494 346 B1**
(45) Veröffentlichungstag und Bekanntmachung des Hinweises auf die Patenterteilung: **14.08.2013**
(21) Anmeldenummer: 10770523.8
(22) Anmeldetag: 04.10.2010
(51) Int. Cl.: G01N 29/28, G01N 29/265, G01N 29/27

(54) **VERBESSERTE KOPPPELMEDIUMVERSORGUNG EINER ULTRASCHALLPRÜFVORRICHTUNG**
IMPROVED COUPLING MEDIUM SUPPLY OF AN ULTRASONIC TEST DEVICE
ALIMENTATION AMÉLIORÉE DU FLUIDE DE COUPLAGE D'UN DISPOSITIF DE CONTRÔLE PAR ULTRASONS

(30) Priorität: 28.10.2009 DE 102009051097
(43) Veröffentlichungstag der Anmeldung: 05.09.2012
(73) Patentinhaber: GE Sensing & Inspection Technologies GmbH, 50354 Hürth (DE)
(72) Erfinder: PRAUSE, Reinhard, 50354 Hürth (DE); BREIDENBACH, Christof, 50354 Hürth (DE)
(74) Vertreter: Lohmanns, Bernard
(86) Internationale Anmeldenummer: PCT/EP2010/064712
(87) Internationale Veröffentlichungsnummer: WO 2011/051081

(56) Entgegenhaltungen:
- DE-A1- 10 118 124
- JP-A- 11 137 909

## Beschreibung

Die Erfindung betrifft ein Verfahren zur zerstörungsfreien Ultraschallprüfung mit verbesserter, insbesondere blasenfreieren Speisung eines Koppelmediums in einen Koppelraum zwischen einen Ultraschallprüfkopf und einen mittels Ultraschall zerstörungsfrei zu untersuchenden Prüfling.

Solche Verfahren sind bekannt aus DE 10118124 A1 und US 2006/0055399 A1.

Das Prinzip der Ultraschalluntersuchung ist bekannt. Es dient zur Ermittlung von Gussfehlern oder sonstigen Materialfehlern, wie Risse, Blasen, Lunker oder Dergleichen. Bei der Prüfung von Stabmaterial geht es insbesondere um Innenfehlerprüfung und Prüfung auf Oberflächenfehler, aber auch auf Prüfung der Abmessungen. Dabei weist der Ultraschallprüfkopf wenigstens einen durch elektrische Impulse erregbaren Sender zum Erzeugen von kurzzeitigen Ultraschallimpulsen, welche in das zu prüfende Material des Prüflings gerichtet werden, auf. Irgendein Fehler in dem zu prüfenden Material, beispielsweise ein Riss, eine Blase oder Dergleichen, bewirkt ein Echo des betreffenden Impulses, das zurück zu dem Prüfkopf reflektiert wird und durch den Sender empfangen wird, welcher in diese Fall gleichzeitig als Empfänger dient, oder das reflektierte Echo kann auch durch einen gesonderten Empfänger des Prüfkopfs empfangen werden, welcher benachbart zu dem Sender angeordnet ist. Die Messung der Zeitverzögerung zwischen dem Ursprungsimpuls und der Rückkehr des Echos ermöglicht Rückschlüsse auf die Tiefe des Fehlers. Die Stärke des Echos ermöglicht eine Anzeige der Größe des Fehlers, um nur diese Auswertungsmöglichkeiten als Beispiel zu nennen. Es sind darüber hinaus auch ortsauflösende Fehlererkennungen möglich.

Zur effektiven Einbringung des abgestrahlten Ultraschalls in den Prüfling ist ein Koppelmedium vorgesehen. Beispielsweise wird eine Wasserstrecke zwischen dem Ultraschallprüfkopf und dem zu prüfenden Prüfling, beispielsweise der Stange, geschaffen und aufrechterhalten werden. Hierfür sind mehrere Techniken bekannt, beispielsweise Prüfung in Tauchtechnik, Pfützentechnik oder mit einem geführten Wasserstrahl. Weiterhin gibt es geschlossene Wasserkammern mit Prüflingdurchlauf, die häufig als SPS bezeichnet werden. Nach dem Einlauf des Prüflings in die geschlossene Wasserkammer dichtet der Prüfling den Kammereinlauf und -auslauf ab. Die Wasserkammer wird mit Wasser gefüllt, um die Ankopplung zwischen Prüfkopf und Prüfling zu erreichen.

Darüber hinaus sind auch Rotationsprüfvorrichtungen bekannt. Durch Rotation der gesamten Prüfkammer einschließlich der Prüfköpfe wird ein stabiler Wassermantel erzeugt. Durch ein- und auslaufseitig angeordnete Dichtsysteme ergibt sich ein im Wesentlichen rohrförmiger Wassermantel, durch den die Prüflinge transportiert werden können.

Eine Schwierigkeit der bekannten Prüfsysteme dieser Art ist, dass sich Inhomogenitäten des Koppelmediums, beispielsweise des Wassers, die Schallausbreitung beeinflussen, was zu Fehlinterpretationen führen kann. Insbesondere stören Luftblasen im Koppelmedium die Prüfung.

Daher ist bei der Prüfung mit Ultraschall ein blasenfreies Koppelmedium erforderlich. Dies ist insbesondere schwierig zu gewährleisten, wenn es sich um komplexe Prüfsysteme handelt, die aus mehreren Prüfköpfen oder Prüfkopfhaltern bestehen und insbesondere wenn diese zu unterschiedlichen Zeitpunkten ein- beziehungsweise ausgeschaltet werden sollen.

Besonders schwierig ist die Gewährleistung der Blasenfreiheit des Koppelmediums bei solchen Prüfsystemen, bei denen das Koppelmedium lange Wege zwischen der Wassereinspeisung und den Prüfköpfen zurücklegt. Erschwerend für die luftblasenfreie Koppelmediumversorgung sind die unterschiedlichen Querschnitte und Druckverhältnisse innerhalb des Versorgungssystems, die jedoch aufgrund der konstruktiven Erfordernisse nicht vermeidbar sind, weil beispielsweise ein Übergang von einem starren Rohr zu einem beweglichen Schlauch unumgänglich ist.

Beim Stand der Technik wird die Blasenfreiheit durch ein möglichst kontinuierliches Strömungsverhältnisse bei geringem Durchfluss zum Prüfkopf durch ein großen konstruktiven Aufwand wie Regelventile, Bypässe, Schnellentlüfter und Beruhigungstanks erreicht, die in die Versorgungsleitung integriert sind. Um diese Kontinuität auch bei sich ändernden Betriebsbedingungen zu gewährleisten, ist zudem ein großer regeltechnischer Aufwand zu treiben, so werden beispielsweise durch Frequenzumrichter regelbaren Pumpe vorgesehen.

Die vorliegende Erfindung stellt sich daher die Aufgabe, eine bezüglich der Diagnose zuverlässigere und in Bezug auf den konstruktiven Aufwand einfachere Ultraschalluntersuchung eines Prüflings bereitzustellen, insbesondere das notwendige Koppelmedium blasenfreier zuführen zu können.

Diese Aufgabe wird durch das Verfahren des Anspruchs 1 gelöst.

Das erfindungsgemäße Ultraschallprüfverfahren sieht vor, dass in einem Ultraschallprüfschritt ein Prüfling mittels durch einen Ultraschallprüfkopf erzeugtem Ultraschall zerstörungsfrei untersucht wird. Die Erfindung ist hinsichtlich der bei der Ultraschallprüfung eingesetzten Technik als auch hinsichtlich des Prüflings nicht eingeschränkt. Das Verfahren eignet sich prinzipiell für jede Art von Ultraschalluntersuchung bei der zur akustischen Kopplung zwischen Prüfkopf und Prüfling ein flüssiges und damit fließfähiges Koppelmedium vorgesehen ist. Somit kann es sich bei dem Prüfling beispielsweise um ein Lebewesen, ein Gegenstand aus Metall oder Kunststoff, ein hohlen oder massiven Gegenstand handeln.

Erfindungsgemäß ist vorgesehen, dass das Koppelmedium in eine kontinuierliche Zirkulation außerhalb des Prüfkopfs gebracht wird. Der Begriff kontinuierlich Zirkulation ist weit auszulegen und sieht vor, dass eine Kreisführung des Mediums, beispielsweise durch Leitungen, vorgesehen ist. Erfindungsgemäß muss dabei nicht die Strömungsgeschwindigkeit konstant gehalten werden. Kontinuierlich im Sinne der Erfindung sieht vor, dass die die Strömung nicht unterbrochen, d.h. die Strömungsgeschwindigkeit nicht auf Null reduziert wird.

Erfindungsgemäß wird der Zirkulation, d.h. dem zirkulierenden Koppelmedium, ein Teil abgezweigt und dieser Teil einem Koppelraum zwischen Ultraschallprüfkopf und Prüfling zugeführt. Dadurch dass das Koppelmedium nur zum Teil über den Ultraschallprüfkopf geführt wird und vor und/oder während der Ultraschallprüfung in einem Kreis außerhalb des Prüfkopfs geführt wird, kann das Koppelmedium effizient in der Zirkulation beruhigt und/entgast werden, um erst dann dem Ultraschallprüfkopf zugeführt zu werden. Dadurch wird die Blasenfreiheit des Koppelmediums verbessert und die Qualität der Ultraschalldiagnostik gesteigert.

Bei einer vorteilhaften Ausgestaltung des erfindungsgemäßen Verfahrens ist zum Ausgleich des Koppelmediumschwunds ferner eine Einspeisung vorgesehen sein.

Bevorzugt ist die Zirkulationsführung außerhalb der und fern von der den Prüfkopf tragenden Vorrichtung vorgesehen. So können bei der erfindungsgemäßen Zirkulationsführung außerhalb des den Prüfkopf tragenden Vorrichtung die das Koppelmedium führenden Leitungen gegenüber einer reinen Zirkulation in der Nähe des Prüfkopfs verkürzt werden, da beispielsweise nur eine Stichleitung zu dem Prüfkopf vorgesehen ist.

Ein weiterer wesentlicher Vorteil einer Zirkulation außerhalb des Prüfkopfs ist, dass der Zulauf des Koppelmediums zu dem Prüfkopf durch Mittel zur Unterbrechung der Zuführung, wie einem Ventil, ohne Unterbrechung der Zirkulation gesteuert werden kann, d.h. dass die Koppelmediumversorgung für den Prüfkopf ein- und ausgeschaltet werden kann, ohne das sich im gesamten Versorgungssystem aufgrund der o.g. Änderungen der Druck- und Durchflussverhältnisse Luftblasen bilden. Bevorzugt ist daher vorgesehen, dass wenigstens vor und nach dem Ultraschallprüfschritt die Abzweigung des Koppelmediums aus der Zirkulation unterbrochen wird, ohne die Zirkulation zu unterbrechen.

Gemäß einer bevorzugten Ausgestaltung wird das Koppelmedium nach der Zuführung zu dem Koppelraum wieder der Zirkulation rückgeführt, dadurch kann der Koppelmediumverbrauch gesenkt werden.

Bevorzugt wird während des Ultraschallprüfschritts das Koppelmedium kontinuierlich aus der Zirkulation abgezweigt und dem Prüfling kontinuierlich zugeführt. Durch die Vermeidung von Unterbrechung im Koppelmediumfluss und durch die Vermeidung von daher einhergehenden Druckschwankungen, insbesondere des Druckabfalls beim Wiederöffnen des Zuflusses wird die Luftblasenbildung minimiert.

Bevorzugt weist das Koppelmedium u.a. aus Kostengründen im Wesentlichen Wasser auf, noch bevorzugter handelt es sich dabei um natürliches Wasser.

Bevorzugt wird das Koppelmedium in der Zirkulation entgast. Entgasung im Sinne der Erfindung meint, dass Mittel zur Entgasung vorgesehen sind, die die Entgasung des strömenden Koppelmediums fördern. Bevorzugt handelt es sich um einen Beruhigungstank. Die gemäß einer vorteilhaften Ausgestaltung vorgesehene Einspeisung zum Ausgleich des Koppelmediumschwunds erfolgt bevorzugt in den Beruhigungstank. Gemäß einer weiteren vorteilhaften Ausgestaltung sind die Mittel zur Entgasung so ausgestaltet, dass eine mäanderförmige Führung bzw. Strömung des Koppelmediums erreicht wird. Die damit erreichten Änderungen der Strömungsrichtung sind für das Ausgasen des Koppelmediums förderlich. Bevorzugt ist die mäanderförmige Strömungsführung in den Beruhigungstank integriert.

Gemäß einer weiteren vorteilhaften Ausgestaltung sind die Mittel zur Entgasung so ausgestaltet, dass eine der Richtung der Schwerkraft folgende Strömung des Koppelmediums erreicht wird. Indem das Koppelmedium der Schwerkraft folgend strömt, wird die Separierung von den Luftblasen und dem Koppelmedium und damit die Entgasung erleichtert. Diese Strömungsrichtung kann durch vertikale Strömungsstrecken in der mäanderförmigen Führung im Beruhigungstank realisiert sein.

Das erfindungsgemäße Verfahren eignet sich besonders bei solchen Verfahren, bei denen während des Ultraschallprüfschrittes oder intermittierend zwischen mehreren Ultraschallprüfschritten der Prüfling relativ zum Prüfkopf bewegt wird oder umgekehrt.

Das hierin beschriebene erfindungsgemäße Verfahren hat sich als besonders vorteilhaft bei den in den Offenlegungen DE 19931350 A1 und DE 10 2007 039 325 A1 beschriebenen Prüfvorrichtungen erwiesen.

Die Blasenfreiheit des Koppelmediums hat sich als besonders vorteilhaft bei solchen Prüflingen erwiesen, bei denen der Ultraschall nicht in eine ebene Fläche eingekoppelt werden kann. Daher findet das erfindungsgemäße Verfahren bevorzugt Anwendung, bei einem Stab oder Rohr als Prüfling.

Dadurch dass das Koppelmedium nur zum Teil über bzw. dem Ultraschallprüfkopf zugeführt wird und vor und/oder während der Ultraschallprüfling in einem Kreislauf außerhalb des Prüfkopfs geführt wird, kann das Koppelmedium effizient in der Zirkulation beruhigt und/entgast werden, um erst dann dem Ultraschallprüfkopf effizient entgast beispielsweise in einer Stichleitung zugeführt zu werden. Dadurch wird die Blasenfreiheit des Koppelmediums verbessert und die Qualität der Ultraschalldiagnostik der Ultraschallvorrichtung gegenüber dem Stand der Technik gesteigert. Ferner können bei der Zirkulationsführung außerhalb des Prüfkopfs die das Koppelmedium führenden Leitungen verkürzt werden. Ein weiterer wesentlicher Vorteil einer Zirkulation außerhalb des Prüfkopfs ist, dass der Zulauf des Koppelmediums zu dem Prüfkopf ohne Unterbrechung der Zirkulation gesteuert werden kann, d.h. dass die Koppelmediumversorgung für den Prüfkopf ein- und ausgeschaltet werden kann, ohne die Entgasung in der Zirkulation zu unterbrechen und unter Umgehung des Problems, dass sich im gesamten Versorgungssystem aufgrund der o.g. Änderungen der Druck- und Durchflussverhältnisse Luftblasen bilden. Bevorzugt sind daher Mittel zur Unterbrechung der Zuführung des Koppelmediums in den Koppelraum, wie ein Ventil oder Dergleichen, vorgesehen, die nicht die Zirkulation unterbrechen, weil Sie beispielsweise in der Zuleitung zu dem Prüfkopf vorgesehen sind.

Zur Verringerung des Koppelmediumverbrauchs sind bevorzugt Mittel zur Rückführung des dem Koppelraum zugeführten Koppelmediums in die Zirkulation, wie Auffangsysteme, vorgesehen.

Bevorzugt sind, wie zuvor beschrieben, Mittel zur Entgasung des Koppelmediums vorgesehen.

Die Erfindung sowie das technische Umfeld werden nachfolgend anhand der Figur näher erläutert. Es ist darauf hinzuweisen, dass die Figur eine besonders bevorzugte Ausführungsvariante der Erfindung zeigt, diese jedoch nicht darauf beschränkt ist. Es zeigt schematisch:

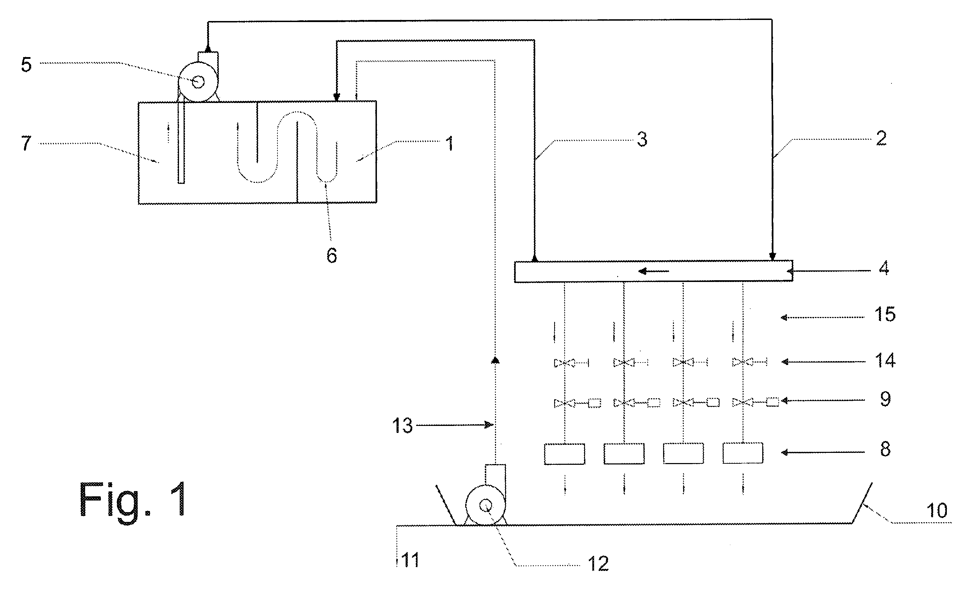

Fig. 1 eine schematische Ansicht zur Durchführung des erfindungsgemäßen Verfahrens.

Fig. 1 zeigt schematisch das erfindungsgemäße Verfahren in einer bevorzugten Ausführungsform, wobei im Wesentlichen nur die für die Koppelmediumversorgung vorgesehenen Komponenten dargestellt sind und abgesehen von den Prüfköpfen die für Ultraschalluntersuchung vorgesehenen Komponenten und der betreffende Prüfling aus Übersichtlichkeitsgründen nicht dargestellt sind. Das Koppelmedium, bevorzugt natürliches Wasser, dient der akustischen Kopplung zwischen dem betreffenden Prüfkopf 8 und dem mittels Ultraschall zu untersuchenden Prüfling, und es wird einem dafür vorgesehen, nicht näher dargestellten, Kopplungsraum zugeführt. Die erfindungsgemäße Koppelmediumversorgung sieht eine kontinuierliche Zirkulation des Koppelmediums vor. Die Zirkulation kann während und/oder vor der Ultraschallprüfung durchgeführt werden. Die Zwangszirkulation in der gezeigten Ausführungsform ist durch die Leitungen 2, 3 und den Verteiler 4, den Beruhigungstank 1 und die Pumpe 5 realisiert. Dabei ist der Beruhigungstank 1 und insbesondere das darin vorgesehene mäanderförmige Leitungssystem 6 zur Entgasung des Koppelmediums vorgesehen. Dieses mäanderförmige Leitungssystem 6 ist so verlegt, dass möglichst lange Teilstrecken vorgesehen sind, bei denen der Strömungsverlauf so gewählt ist, dass das Koppelmedium seiner Schwerkraftrichtung folgend strömt, was der Trennung von Luftblasen und Medium und damit der Entgasung förderlich ist. Im Beruhigungstank 1 ist ferner ein Bereich 7 vorgesehen, der der Einspeisung von neuem Koppelmedium dient, um den Koppelmediumschwund kompensieren zu können.

Aus der Zirkulation wird ein Teil des Koppelmediums über den Verteiler 4 abgezweigt und in unabhängigen, separat über händisch zu bedienende Absperrventile 14 und pneumatisch zu bedienende Ventile 9 absperrbare Stichleitungen 15 den Prüfköpfen 8 zugeführt. Das dem Koppelraum entweichende Koppelmedium wird durch eine Auffangwanne gesammelt und mittels der Pumpe 12 und der Rückführleitung 13 in die Zirkulation, d.h. den Beruhigungstank 1, zurückgeführt. Zur Wartung, Reinigung und Dergleichen des Systems ist ein Ablauf 11 vorgesehen. Dadurch dass das Koppelmedium nur zum Teil über den Ultraschallprüfkopf geführt wird und vor und/oder während der Ultraschallprüfling in einem Kreis geführt wird, kann das Koppelmedium effizient in der Zirkulation beruhigt und/entgast werden, um erst dann dem Ultraschallprüfkopf zugeführt zu werden. Dadurch wird die Blasenfreiheit des Koppelmediums verbessert und die Qualität der Ultraschalldiagnostik gesteigert. Ferner können durch die erfindungsgemäße Zirkulationsführung, bei der der Prüfkopf nicht in die für die Entgasung vorgesehene Zirkulation integriert ist, die das Koppelmedium führenden Leitungen gegenüber einer reinen Zirkulation über den Prüfkopf verkürzt werden. Ein weiterer wesentlicher Vorteil einer Zirkulation außerhalb des Prüfkopfs ist, dass der Zulauf des Koppelmediums zu dem Prüfkopf gesteuert werden kann, d.h. dass die Koppelmediumversorgung für den Prüfkopf ein- und ausgeschaltet werden kann, ohne das sich im gesamten Versorgungssystem aufgrund der o.g. Änderungen der Druck- und Durchflussverhältnisse Luftblasen bilden.

## Patentansprüche

1. Ultraschallprüfverfahren mit einem Ultraschallprüfschritt bei dem ein Prüfling mittels durch einen Ultraschallprüfkopf (8) erzeugten Ultraschalls zerstörungsfrei untersucht wird, wobei vor und während des Ultraschallprüfschritts ein flüssiges Koppelmedium in eine kontinuierliche Zirkulation außerhalb des Prüfkopfs gebracht wird, **dadurch gekennzeichnet, dass** während des Ultraprüfschritts der Zirkulation ein Tell des Koppelmedlums abgezweigt wird und einem Koppelraum zwischen Ultraschallprüfkopf und Prüfling zugeführt wird und dass wenigstens vor und nach dem Ultraschallprüfschritt die Abzweigung des Koppelmediums aus der Zirkulation für den Zulauf des Koppelmediums zu dem Prüfkopf(8) unterbrochen wird, ohne die Zirkulation zu unterbrechen.

2. Verfahren gemäß dem vorhergehenden Anspruch, **dadurch gekennzeichnet, dass** das Koppelmedium nach der Zuführung zu dem Koppelraum wieder der Zirkulation rückgeführt wird.

3. Verfahren gemäß einem der vorhergehenden Ansprüche, **dadurch gekennzeichnet, dass** das Koppelmedium Wasser aufweist.

4. Verfahren gemäß dem vorhergehenden Anspruch, **dadurch gekennzeichnet, dass** das Koppelmedium natürliches Wasser ist.

5. Verfahren gemäß einem der vorhergehenden Ansprüche, **dadurch gekennzeichnet, dass** das Koppelmedium in der Zirkulation entgast wird.

6. Verfahren gemäß einem der vorhergehenden Ansprüche, **dadurch gekennzeichnet, dass** während des Ultraschallprüfschrittes oder intermittierend zwischen mehreren Ultraschallprüfschritten der Prüfling relativ zum Prüfkopf (8) bewegt wird oder umgekehrt.

7. Verfahren gemäß einem der vorhergehenden Ansprüche, **dadurch gekennzeichnet, dass** der Prüfling ein Stab oder ein Rohr ist.

## Claims

1. An ultrasound testing method comprising an ultrasound testing step in which a test object is non-destructively inspected by means of ultrasound generated by an ultrasound test probe (8), wherein a liquid coupling medium is brought into a continuous circulation outside the test probe before and during the ultrasound testing step, **characterised in that** a part of the coupling medium is branched off from the circulation during the ultrasound testing step and fed to a coupling chamber between the ultrasound test probe and the test object, and that the branch-off of the coupling medium from the circulation is interrupted at least before and after the ultrasound testing step for the inflow of the coupling medium to the test probe (8) without interrupting the circulation.

2. A method according to the preceding claim, **characterised in that** the coupling medium is returned to the circulation after having been supplied to the coupling chamber.

3. A method according to any one of the preceding claims, **characterised in that** the coupling medium comprises water.

4. A method according to the preceding claim, **characterised in that** the coupling medium is natural water.

5. A method according to any one of the preceding claims, **characterised in that** the coupling medium is degassed in the circulation.

6. A method according to any one of the preceding claims, **characterised in that** the test object is moved relative to the test probe (8) or vice versa during the ultrasound testing step or intermittently between several ultrasound testing steps.

7. A method according to any one of the preceding claims, **characterised in that** the test object is a bar or a tube.

## Revendications

1. Procédé de contrôle par ultrasons comprenant une étape de contrôle par ultrasons dans laquelle une éprouvette est examinée d'une manière non-destructive au moyen d'ultrason généré par un palpeur à ultrasons (8), un milieu liquide de couplage étant mis en une circulation continue hors du palpeur avant et durant ladite étape de contrôle par ultrasons, **caractérisé par le fait que**, durant ladite étape de contrôle par ultrasons, une partie du milieu de couplage est dérivée de la circulation et est amenée à un espace de couplage entre ledit palpeur à ultrasons et ladite éprouvette, et que, au moins avant et après l'étape de contrôle par ultrasons, la dérivation du milieu de couplage de ladite circulation est interrompue pour amener le milieu de couplage au palpeur (8), sans interrompre la circulation.

2. Procédé selon la revendication précédente, **caractérisé par le fait que**, après l'avoir amené à l'espace de couplage, le milieu de couplage est remis en circulation.

3. Procédé selon l'une quelconque des revendications précédentes, **caractérisé par le fait que** ledit milieu de couplage est de l'eau.

4. Procédé selon la revendication précédente, **caractérisé par le fait que** ledit milieu de couplage est de l'eau naturelle.

5. Procédé selon l'une quelconque des revendications précédentes, **caractérisé par le fait que** ledit milieu de couplage est dégazé dans la circulation.

6. Procédé selon l'une quelconque des revendications précédentes, **caractérisé par le fait que**, durant l'étape de contrôle par ultrasons ou de façon intermittente entre plusieurs étapes de contrôle par ultrasons, ladite éprouvette est déplacée par rapport au palpeur (8) ou vice versa.

7. Procédé selon l'une quelconque des revendications précédentes, **caractérisé par le fait que** ladite éprouvette est une barre ou un tuyau.
